Europäisches Patentamt

European Patent Office

Office européen des brevets

(11) Veröffentlichungsnummer: **0 261 349 B1**

# EUROPÄISCHE PATENTSCHRIFT

(45) Veröffentlichungstag der Patentschrift: **27.03.91**

(51) Int. Cl.⁵: **F16H 1/22**, B30B 11/24, B29C 47/08

(21) Anmeldenummer: **87110946.8**

(22) Anmeldetag: **28.07.87**

(54) Getriebe.

(30) Priorität: **16.09.86 DE 3631478**

(43) Veröffentlichungstag der Anmeldung:
**30.03.88 Patentblatt 88/13**

(45) Bekanntmachung des Hinweises auf die
Patenterteilung:
**27.03.91 Patentblatt 91/13**

(84) Benannte Vertragsstaaten:
**AT BE DE FR GB IT**

(56) Entgegenhaltungen:
**DE-A- 2 825 762**
**DE-A- 3 534 212**
**DE-A- 3 535 484**
**DE-C- 317 235**

(73) Patentinhaber: **Werner & Pfleiderer GmbH**
**Theodorstrasse 10**
**W-7000 Stuttgart(DE)**

(72) Erfinder: **Kramer, Erhard**
**Neuerbstrasse 9**
**W-8600 Bamberg(DE)**
Erfinder: **Manecke, Reinhard**
**Eisvogelweg 8**
**W-7000 Stuttgart 50(DE)**

**Beschreibung**

Die Erfindung betrifft ein Getriebe mit den Merkmalen des Oberbegriffs des Anspruchs 1.

Bei einem aus der DE-A- 35 34 212 bekannten Getriebe ist zur Drehrichtungsumkehr einer der beiden Abtriebswellen ein Wendegetriebe vorgesehen, bei dem ein Umstellen der Drehrichtung durch selektives Verbinden zweier Zahnräder über eine Klauenkupplung erfolgt. Maßnahmen für ein Umstellen bei genau definierter Drehlage der Abtriebswellen sind hierbei nicht vorgesehen.

Bei einem weiter aus der DE-A- 28 25 762 bekannten Getriebe ist zur Drehrichtungsumkehr einer der beiden Antriebswellen ein Wendegetriebe vorgesehen, das zum Umstellen von Gleichlauf auf Gegenlauf auszubauen ist. Zum Umstellen auf Gleichlauf muß das Wendegetriebe wieder eingebaut werden.

Der Erfindung liegt die Aufgabe zugrunde, ein Getriebe dem im Oberbegriff des Anspruchs 1 beschriebenen Art so auszubilden, daß ein Umschalten von Gleichlauf auf Gegenlauf oder umgekehrt bei genau definierter Drehlage der Abtriebswellen zueinander von Hand oder automatisch möglich ist.

Zur Lösung dieser Aufgabe dienen die Merkmale des Anspruchs 1.

Das Getriebe nach der Erfindung hat also zwei von einer gemeinsamen Antriebswelle angetriebene Getriebezüge. Das zum Umschalten von Gleichlauf auf Gegenlauf zusätzliche Zahnrad ist ein ständig in den einen Getriebezug eingeschaltetes Zahnrad, welches mittels Getriebezug eingeschaltetes Zahnrad, welches mittels eines Schaltzahnrades des anderen Getriebezuges gekuppelt wird. Das Schaltzahnrad wird zum Umschalten von Gegenlauf auf Gleichlauf der beiden Antriebswellen direkt mit der Antriebswelle gekuppelt.

Ein Umschalten von Gleichlauf auf Gegenlauf ist nur dann möglich, wenn die Abtriebswellen eine genau definierte Drehlage zueinander einnehmen, welche beispielsweise zum Betrieb eines Doppelschnecken-Extruders zwingend erforderlich ist. Um diese Drehlage zu gewährleisten, ist eine Schaltsperre vorgesehen, welche das Umschalten des Schaltzahnrades nur bei der genannten definierten Drehlage zuläßt.

Zum Umschalten müssen also die Abtriebswellen zunächst in die korrekte Drehlage gebracht werden. Hierzu ist eine der Getriebeuntersetzung entsprechende Anzahl von Drehungen nötig, bei einer Getriebeuntersetzung i = 2 also zwei Umdrehungen. Eine ganzzahlige Getriebeuntersetzung ist bevorzugt, weil bei einer nicht ganzzahligen Untersetzung jeweils eine große Zahl von Umdrehungen erforderlich ist, um das Schaltzahnrad durch die Schaltsperre durchschalten zu können.

Die Vorteile des Getriebes nach der Erfindung lassen sich wie folgt zusammenfassen:

Es ist eine Umschaltung ohne Eingriff in das Getriebe - Ein- oder Ausbauen von Rädern - möglich. Das Getriebe läßt sich von Hand wie auch automatisch unter Verwendung von Hilfskraft schalten, z.B. pneumatisch oder hydraulisch.

Die relative Drehlage der Abtriebswellen ist aufgrund des ständigen Zahneingriffs im Betrieb eindeutig festgelegt, wie dies beispielsweise für die Anwendung in einem Doppelschnecken-Extruder erforderlich ist.

Das Getriebe nach der Erfindung läßt schließlich ungeachtet seiner Umschaltbarkeit alle Möglichkeiten der Leistungsverzweigung offen, wie sie insbesondere zum Antrieb von Doppelschnecken-Extrudern häufig gefordert wird.

Die Anordnung des Schaltzahnrades im Eintriebsbereich des Getriebes, was eine bevorzugte Weiterbildung der Erfindung darstellt, sorgt für eine geringe Drehmomentbelastung im Vergleich zum Stand der Technik, wo das Wendegetriebe unmittelbar auf die Schneckenwellen wirkt und somit ein hohes Drehmoment aushalten muß.

Die Erfindung ist im folgenden anhand schematischer Zeichnungen an einem Ausführungsbeispiel mit weiteren Einzelheiten näher erläutert. Es zeigen:

Fig. I     eine schematische Seitenansicht eines Getriebes nach der Erfindung;

Fig. 2     ein Getriebeschema des Getriebes nach Fig. I, bei welchem die beiden Getriebezüge mit sämtlichen Wellen in eine gemeinsame Ebene geklappt sind;

Fig. 3     einen Teilschnitt nach der Linie III-III in Fig. 2.

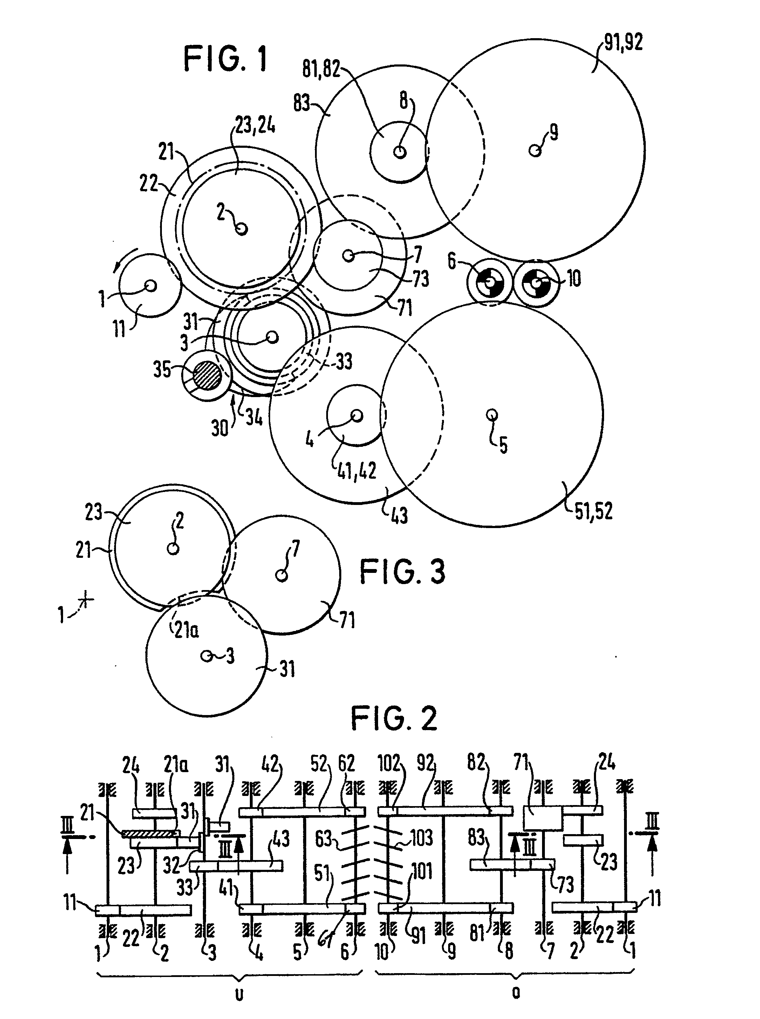

Gemäß Fig. I sind die beiden Abtriebswellen 6,I0, welche die Extruderschnecken 63,I03 tragen, von einer gemeinsamen Antriebswelle I mit einer nachgeschalteten, ins Langsame übersetzenden Verteile rwelle 2 aus über zwei getrennte Getriebezüge o,u (Fig. 2) mit gleicher Drehzahl angetrieben. An dieser Stelle sei darauf hingewiesen, daß aufgrund der gewählten Darstellung in Fig. 2 die beiden Getriebezügen o,u gemeinsamen Wellen I,2 zweimal dargestellt sind, obwohl sie in der Realität (Fig. I) nur einmal vorhanden sind.

Auf der das Drehmoment gleichmäßig auf die beiden Getriebezüge o, u aufteilenden Verteilerwelle 2 sitzt ein Zahnrad 22, welches von einem Zahnrad II der Welle I angetrieben wird. Auf der Verteilerwelle 2 sitzen ferner zwei im Abstand angeordnete Zahnräder 23,24. Zwischen den Zahnrädern 23 und 24 ist drehfest mit der Verteilerwelle 2 eine Sperrscheibe 2I angeordnet, welche eine bogenförmige Nut 2Ia (Fig.3) am Umfang hat. Die bogenförmige Nut 2Ia ist so bemessen, daß ein Schaltzahnrad 3I, welches am Umfang einer auf der Welle 3 axial verschieblichen, jedoch drehfesten Schaltmuffe 32 angeordnet ist, bei richtiger Drehstellung der Wellen 2, 3 zueinander durch die Sperrescheibe 2l hindurch axial verschieblich ist. Das Schaltzahnrad 3l wirkt in der einen Schaltstellung mit dem Zahnrad 23 auf der Verteilerwelle 2 und in der anderen Schaltstellung mit einem Zahnrad 7l auf der Welle 7 des oberen Getriebezuges o zusammen. Dieses Zahnrad 7l ist mit dem Zahnrad 24 auf der Verteilerwelle 2 ständig in Eingriff.

Das Schaltzahnrad 3l ist über eine Schaltvorrichtung 30 mit Schaltgabel 34 in die beiden in Fig. 2 alternativ gezeichneten Lagen verschieblich, wobei die Schaltlage des Schaltzahnrades 3l, welche in Fig. 2 rechts von der Welle 3 zu sehen ist, diejenige Lage ist, bei welcher die Zahnräder 3l,7l miteinander kämmen. Die Schaltgabel 34 ist mittels Schaltstange 35 von Hand oder über eine Hilfskraft verschiebbar, beispielsweise pneumatisch oder hydraulisch. Von der Welle 3 wird das Drehmoment auf die Welle 4 über eine Zahnradpaarung 33,43 übertragen, von wo aus das Drehmoment über die Welle 5 auf die Abtriebs- oder Extruderwelle 6 über Zahnradpaarungen 4l,5l,6l und 42,52,62 übertragen wird. Im beschriebenen Fall haben die Zahnradpaarungen 4l,5l,6l und 42,52,62 Schrägverzahnungen entgegengesetzter Schrägung, um eine Leistungsteilung zu verwirklichen. Bei Verzicht auf diese Leistungsteilung kann jedoch auch eine Gruppe Zahnradpaarungen mit gradverzahnten oder pfeilverzahnten Stirnrädern ausreichen, z.B. die Gruppe 4l,5l,6l.

In gleicher Weise werden die Drehmomente von der Welle 7 über die Zahradpaarungen 73,83 af die Welle 8 und von dieser auf die Welle 9 und die Abtriebswelle bzw. Extruderwelle l0 über Zahnradpaarungen 8l,9l,l0l und 82,92,l02 übertragen.

Der Kraftfluß ist dabei für den Fall des Gleichlaufs, d.h. gleicher Drehrichtung der beiden Abtriebswellen 6,l0

im unteren Getriebezug u:
Antriebswelle I zu Verteilerwelle 2 zu Welle 3 zu Welle 4 zu Welle 5 zu Abtriebswelle 6;
und im oberen Getriebezug o:
Antriebswelle I zu Verteilerwelle 2 zu Welle 7 zu Welle 8 zu Welle 9 zu Abtriebswelle l0.

In diesem Fall ist also die Schaltstellung des Schaltzahnrades 3l eingestellt, die links von der Welle 3 in Fig. 2 eingezeichnet ist. Hierbei kämmen die Zahnräder 23 und 3l miteinander, und das Schaltzahnrad 3l ist nicht in Eingriff mit dem Zahnrad 7l.

Der Kraftfluß bei Gegenlauf, bei dem sich die beiden Abtriebswellen 6,l0 gegenläufig drehen, ist im unteren Getriebezug:
Antriebswelle I zu Verteilerwelle 2 zu Welle 7 zu Welle 3 zu Welle 4 zu Welle 5 zu Abtriebswelle 6;
und im oberen Getriebezug:

Antriebswelle I zu Verteilerwelle 2 zu Welle 7 zu Welle 8 zu Welle 9 zu Abtriebswelle l0.

In diesem Fall ist die Schaltstellung maßgeblich, die in Fig. 2 rechts von der Welle 3 dargestellt ist, wobei das Schaltzahnrad 3l mit dem Zahnrad 7l und nicht mit dem Zahnrad 23 in Eingriff ist.

Bei Betrieb im Gegenlauf ist also in den unteren Getriebezug u zusätzlich das Rad 7l zwischen die Räder 23 und 3l eingeschaltet, was zur Drehrichtungsumkehr der Abtriebswelle 6 führt.

## Ansprüche

1. Getriebe zum Übertragen einer Antriebskraft auf zwei Abtriebswellen (6,10), insbesondere eines Doppelschnecken-Extruders, wobei die beiden Abtriebswellen (6,10) von einer gemeinsamen Antriebswelle (1) aus über zwei Getriebezüge (u,o) angetrieben sind und zur Drehrichtungsumkehr einer der beiden Abtriebswellen ein zusätzliches Zahnrad (71) in das Getriebe eingeschaltet ist, dadurch gekennzeichnet, daß das zusätzliche Zahnrad ein unverrückbar an gleicher Stelle in den einen Getriebezug (o) eingeschaltetes Zahnrad (71) ist, daß ein Schaltzahnrad (31) im anderen Getriebezug (u) über eine Schaltvorrichtung (30) wahlweise mit der Antriebswelle (1) oder mit dem zusätzlichen Zahnrad (71) kuppelbar ist und daß eine von einer Sperrscheibe (21) gebildete Schaltsperre vorgesehen ist, welche auf einer beiden Getriebezügen gemeinsamen Verteilerwelle (2) angeordnet ist und eine Nut (2la) an ihrem Umfang hat, welche ein Umschalten des Schaltzahnrades (31) nur bei definierter Drehlage der Abtriebswellen (6,10) zueinander zuläßt.

2. Getriebe nach Anspruch 1, dadurch gekennzeichnet, daß die Getriebeuntersetzung (i) ganzzahlig ist.

3. Getriebe nach Anspruch 2, dadurch gekennzeichnet, daß die Getriebeuntersetzung (i) gleich 2 ist.

4. Getriebe nach einem der Ansprüche 1 bis 3, dadurch gekennzeichnet, daß das Schaltzahnrad (31) ein auf einer Welle (3) des anderen Getriebezuges (u) axial verschieblich, jedoch drehfest angeordnetes Zahnrad ist.

5. Getriebe nach einem der Ansprüche 1 bis 4, dadurch gekennzeichnet, daß das Schaltzahnrad (31) Teil einer Schaltmuffe (32) bildet, welche über eine Keilverzahnung auf der entsprechenden Welle (3) drehfest und axial verschieblich gehalten ist und daß die Schaltmuffe (32) mittels einer Schaltgabel (34) axial verschieblich ist, welche mittels einer von Hand oder durch Hilfskraft betätigbaren Schaltstange (35) betätigbar ist.

6. Getriebe nach einem der Ansprüche 1 bis 5, dadurch gekennzeichnet, daß jeder Getriebezug (o,u) über zwei doppelt schrägverzahnte Räder (51,52;91,92) auf zwei Ritzel (61,62;l01,102) der Abtriebswellen (6,10) wirkt.

7. Getriebe nach einem der Ansprüche 1 bis 6, dadurch gekennzeichnet, daß das Schaltzahnrad (31) im Eintriebsbereich des Getriebes angeordnet ist.

8. Getriebe nach Anspruch 7, dadurch gekennzeichnet, daß das Schaltzahnrad (31) auf einer Zwischenwelle (3) sitzt, welche einer das Drehmoment auf die beiden Getriebezüge (o,u) aufteilenden Verteilerwelle (2) nachgeordnet ist, und daß das Schaltzahnrad (31) im vom zusätzlichen Zahnrad (71) entkuppeltem Zustand mit einem Zahnrad (23) auf der Verteilerwelle (2) kämmt.

## Claims

1. Gear for transmitting a driving force to two drive output shafts (6, 10), in particular of a double-worm extruder, wherein both the drive output shafts (6, 10) are driven by way of two gear trains (u, o) from a common driving shaft (1) and an additional toothed wheel (71) is connected into the gear for reversal of direction of rotation of one of both the drive output shafts, characterised theeby, that the additional toothed wheel is a toothed wheel (71) immovably connected at the same place into the one gear train (o), that a gear shift toothed wheel (31) in the other gear train (u) is couplable by way of a gear shift device (30) selectably with the driving shaft (1) or with the additional toothed wheel (71) and that a gear shift block is provided, which is formed by a locking disc (21), is arranged on a distributor shaft (2) common to both gear trains and at its circumference has a groove (21a), which permits a switching-over of the gear shift toothed wheel (31) only in the case of a defined relative rotational position of the drive output shafts (6, 10).

2. Gear according to claim 1, characterised thereby, that the stepdown gear ratio (i) is an integral number.

3. Gear according to claim 2, characterised thereby, that the stepdown gear ratio (i) is equal to 2.

4. Gear according to one of the claims 1 to 3, characterised thereby, that the gear shift toothed wheel (31) is a toothed wheel which is arranged to be axially displaceable, yet secure against rotation on a shaft (3) of the other gear train (u).

5. Gear according to one of the claims 1 to 4, characterised thereby, that the gear shift toothed wheel (31) forms part of a gear shift sleeve (32), which is retained by way of splines to be secure against rotation and axially displaceable on the corresponding shaft (3) and that the gear shift sleeve (32) is axially displaceable by means of a gear shift fork (34), which is actuable by means of a gear shift rod (35), which is actuable manually or by auxiliary force.

6. Gear according to one cf the claims 1 to 5, characterised thereby, that each gear train (o, u) acts by way of two herringbone gear wheels (51, 52; 91, 92) on two pinions (61, 62; 101, 102) of the drive output shafts (6, 10).

7. Gear according to one of the claims 1 to 6, characterised thereby, that the gear shift toothed wheel (31) is arranged in the input region of the gear.

8. Gear according to claim 7, characterised thereby, that the gear shift toothed wheel (31) sits on an intermediate shaft (3), which is arranged downstream of a distributor shaft (2) dividing the torque over both the gear trains (o, u) and that the gear shift toothed wheel (31) in the state, in which it is uncoupled from the additional toothed wheel (71), meshes with a toothed wheel (23) on the distributor shaft (2).

## Revendications

1. Transmission destinée à transmettre une énergie d'entraînement à deux arbres menés (6, 10), notamment dans le cas d'une extrudeuse à deux vis, ces deux arbres menés (6, 10) étant entraînés par un arbre menant (1) commun, par l'intermédiaire de deux trains d'engrenages (o, u) et une roue dentée (71) auxiliaire étant intercalée dans cette transmission pour inverser le sens de rotation de l'un desdits arbres menés, transmission caractérisée en ce que la roue dentée auxiliaire (71) est une roue dentée intercalée en permanence à la même place dans l'un des trains d'engrenages (o); en ce qu'une roue dentée (31) d'inversion de l'autre train d'engrenages (u) peut être reliée à volonté, par l'entremise d'un dispositif inverseur (30), à l'arbre menant (1) ou à la roue dentée auxiliaire (71); et en ce qu'il est prévu un verrouillage de l'inversion, constitué par un disque (21) de blocage, qui est disposé sur un arbre répartiteur (2) commun aux deux trains d'engrenages et qui comporte sur sa périphérie une encoche (21a), laquelle ne permet de changer la roue dentée en prise avec cette roue (31) d'inversion que lorsque les arbres menés (6, 10) ont des positions angulaires respectives déterminées.

2. Transmission selon la revendication 1, caractérisée en ce que son rapport (i) de démultiplication est un nombre entier.

3. Transmission selon la revendication 2, caractérisée en ce que son rapport (i) de démultiplication est égal à 2.

4. Transmission selon l'une des revendications 1 à 3, caractérisée en ce que la roue dentée (31) d'inversion est montée sur un arbre (3) de l'autre train d'engrenages (u), de manière à pouvoir coulisser axialement sur cet arbre, mais à en être solidaire en rotation.

5. Transmission selon l'une des revendications 1 à 4, caractérisée en ce que la roue dentée (31) d'inversion fait partie d'un manchon (32),qu'une cannelure de l'arbre (3) correspondant solidarise en rotation avec cet arbre en lui permettant d'y coulisser axialement, et en ce que ce manchon (32) peut être déplacé axialement au moyen d'une fourchette (34), qui peut être manoeuvrée à l'aide d'une tige (35) actionnable manuellement ou par une force auxiliaire.

6. Transmission selon l'une des revendications 1 à 5, caractérisée en ce que chaque train d'engrenages (o, u) agit par deux roues (51, 52 ; 91, 92) à chevrons sur deux pignons (61, 62 ; 101, 102) des arbres menés (6, 10).

7. Transmission selon l'une des revendications 1 à 6, caractérisée en ce que la roue dentée (31) d'inversion est disposée dans la zone d'entrée de cette transmission.

8. Transmission selon la revendication 7, caractérisée en ce que la roue dentée (31) d'inversion est montée sur un arbre (3) intermédiaire qui est disposé à la suite d'un arbre répartiteur (2), répartissant le couple de rotation entre les deux trains d'engrenages (o, u);et en ce que, lorsque cette roue (31) d'inversion est dégagée de la roue dentée auxiliaire (71), elle engrène avec une roue dentée (23) de cet arbre répartiteur (2).

# FIG. 1

# FIG. 3

# FIG. 2